# EUROPEAN PATENT SPECIFICATION

(11) **EP 1 655 501 B1**
(45) Date of publication and mention of the grant of the patent: **15.08.2007**
(21) Application number: 05019744.1
(22) Date of filing: 12.09.2005
(51) Int. Cl.: F16D 13/56

(54) **Method for manufacturing a power transmitting apparatus**
Verfahren zur Herstellung einer Leistungsübertragungsvorrichtung
Méthode de fabrication d'un dispositif de transmission de puissance

(30) Priority: 09.11.2004 JP 2004325289
(43) Date of publication of application: 10.05.2006
(73) Proprietor: KABUSHIKI KAISHA F.C.C., Hamamatsu-shi Shizuoka (JP)
(72) Inventor: Kataoka, Makoto, Hamamatsu-shi Shizuoka (JP); Kashiwagi, Satoru, Hamamatsu-shi Shizuoka (JP); Itou, Shunichi, Hamamatsu-shi Shizuoka (JP)
(74) Representative: Thielmann, Andreas

(56) References cited:
- EP-A- 1 058 018
- DE-A- 1 941 683
- PATENT ABSTRACTS OF JAPAN vol. 010, no. 273 (M-518), 17 September 1986 (1986-09-17) & JP 61 096222 A (KAWASAKI HEAVY IND LTD), 14 May 1986 (1986-05-14)
- PATENT ABSTRACTS OF JAPAN vol. 014, no. 395 (M-1016), 27 August 1990 (1990-08-27) & JP 02 150517 A (SUZUKI MOTOR CO LTD), 8 June 1990 (1990-06-08)

## Description

### BACKGROUND OF THE INVENTION

### Field of the Invention

The present invention relates to a method for manufacturing a power transmitting apparatus for arbitrarily transmitting or cutting-off a rotational force of an input member to or from an output member.

### Description of Background Art

In general, the power transmission apparatus for a vehicle generally uses so-called a multiple disk clutch for arbitrarily transmitting or cutting-off a power of an engine to or from wheels of vehicle. In such a power transmitting apparatus, it has an input member connected to an engine side, an output member connected to driven, and a clutch member connected to the output member, and the power can be transmitted by pressure-contacting a plurality of driving clutch plates mounted on the input member and a plurality of driven clutch plates mounted on the clutch member and can be cut-off by releasing the pressure-contacting force between the driving and driven clutch plates.

It is disclosed in a prior art (e.g. European Laid-open Patent Specification No. 1058018) a technology of providing cams for adding a pressure-contact assisting function to improve the pressure-contacting force of both driving and driven clutch plates during power transmission as well as a back-torque limiting function to release the clutch plates of input and output sides when the rotation speed of the output member has exceeded that of the input member. According to the power transmitting apparatus of this prior art, two cams are formed by providing gradient on each engaging surface of a clutch housing and a driving clutch plate so that both the driving and driven clutch plates are moved by one pair of cams (pressure-contact assisting cams) toward a direction in which the driving clutch plates are strongly pressure-contacted with the driven clutch plates during the normal power transmission and on the contrary the driving clutch plates are moved by the other pair of cams (back-torque limiting cams) toward a direction in which the pressure-contact between the driving and driven clutch plates are released when the back-torque is caused. Another method of manufacturing a power transmitting apparatus is known from EP 1555450.

However in the power transmitting apparatus of the prior art, since the pressure-contact assisting cams and back-torque limiting cams are formed on engaging surfaces between a clutch housing and driving clutch plates with providing a gradient angle thereon, the strength of the cams would be sometimes insufficient. Accordingly applicant of the present invention has noticed to provide the pressure-contact assisting cams and back-torque limiting cams on recesses of the clutch member and stopper portions of the pressure plate which are made of high strength material to be used for preventing relative rotation between the clutch member and the pressure plate.

The stopper portions are formed integrally with the pressure plate and projected therefrom and adapted to be fitted into the recesses formed on the inner circumferential surface of the clutch member to prevent relative rotation between the pressure plate and the clutch member. Thus both the clutch member and the pressure plate are made of material having high strength and therefore the pressure-contact assisting cams and back-torque limiting cams formed thereon have also high strength for performing a function as cams. In general, since the clutch member and the pressure plate are formed by casting, two cams i.e. the pressure-contact assisting cam and back-torque limiting cam are formed in accordance with a profiled surface of preformed dies.

However in the power transmitting apparatus mentioned above, since the gradient surfaces are formed on the stopper portion of the pressure plate and the recess of the clutch member which are formed by casting, there is caused a problem that either one of the pressure-contact assisting cam and back-torque limiting cam becomes a reverse-draft surface and thus casting of them becomes difficult.

In usual, casting is carried out by pouring molten metal in to a cavity which is formed between movable dies and stationary dies by profiled surfaces corresponding to a configuration of an article to be cast. However either one of the pressure-contact assisting cam and back-torque limiting cam is molded to a configuration (such a configuration is called as a "reverse-draft surface") which inevitably interferes with the profiled surface of the movable die when separating the movable die from the stationary die after molding. This makes the molding of the pressure-contact assisting cam and back-torque limiting cam difficult.

### SUMMARY OF THE INVENTION

It is, therefore, an object of the present invention to provide a method for manufacturing a power transmitting apparatus which can well mold both the pressure-contact assisting cam and back-torque limiting cam even though either one of the pressure-contact assisting cam and back-torque limiting cam is molded as a reverse-draft surface.

### [Means for achieving the object]

For achieving the object of the present invention above, there is provided a method for manufacturing a power transmitting apparatus comprising a clutch housing rotatable together with an input member and having a plurality of driving clutch plates; a clutch member connected to an output member and having a plurality of driven clutch plates alternately arranged between the driving clutch plates of the clutch housing; pressure plate mounted on the clutch member and movable in an axial direction of the clutch member for carrying out the pressure-contact or release of the driving clutch plates and the driven clutch plates via the axial movement relative to the clutch member; stopper portions projected from the pressure plate and fitted in recesses formed on the inner circumferential surface of the clutch member for limiting the rotation of pressure plate relative to the clutch member; pressure-contact assisting cams for increasing the pressure-contacting force between the driving clutch plates and driven clutch plates when a condition of permission of transmission of the rotational force inputted to the input member to the output member is achieved; and back-torque limiting cams for releasing the connection between the driving clutch plates and the driven clutch plates when the rotation speed of the output member has exceeded that of the input member, both the pressure-contact assisting cams and the back-torque limiting cams being formed on the recesses of the clutch member and on the stopper portions of the pressure plate; and the pressure plate including the stopper portions and the clutch member including the recesses being formed by casting characterized in that the pressure plate and the clutch member are respectively formed with through windows at positions corresponding to the pressure-contact assisting cams and the back-torque limiting cams so as to form reverse-draft surfaces of the pressure-contact assisting cams and the clutch member including the recesses being formed by casting characterized in that the pressure plate and the cluth member are respective formed with through windows at positions corresponding to the pressure-contact assisting cams and the back-torque limiting cams so as to form reverse-draft surfaces of the pressure-contact assisting cams and the back-torque limiting cams by inserting pin-shaped cores into the windows.

### [Effects of the invention]

According to the present invention, since the pressure plate and the clutch member are respectively formed with through windows at positions corresponding to the pressure-contact assisting cams and the back-torque limiting cams so as to form reverse-draft surfaces of the pressure-contact assisting cams and the back-torque limiting cams by inserting pin-shaped cores into the windows, it is possible to well mold both the pressure-contact assisting cam and back-torque limiting cam even though either one of the pressure-contact assisting cam and back-torque limiting cam is molded as a reverse-draft surface.

Although the clutch member and the pressure plate are formed with through windows, the windows do not give any influence to functions of the clutch member and the pressure plate, rather, the windows contribute to reduction of weight of the power transmitting apparatus and cooling effect of the power transmitting apparatus can be expected owing to introduction of ambient air through the windows during use of the power transmitting apparatus.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view of a power transmitting apparatus of the present invention; and
Fig. 2 is a schematic view showing a region near the stopper portions and recesses taken from a direction of an arrow A in Fig. 1;
Fig. 3 is a partially enlarged perspective view of a pressure plate showing a method for manufacturing a power transmitting apparatus of the present invention;
Fig. 4 is a partially enlarged perspective view of a pressure plate into which pin-shaped cores are inserted showing a method for manufacturing a power transmitting apparatus of the present invention;
Fig. 5 is a partially enlarged perspective view of a clutch member showing a method for manufacturing a power transmitting apparatus of the present invention; and
Fig. 6 is a partially enlarged perspective view of a clutch member into which pin-shaped cores are inserted showing a method for manufacturing a power transmitting apparatus of the present invention.

### DESCRIPTION OF THE PREFERRED EMBODIMENTS

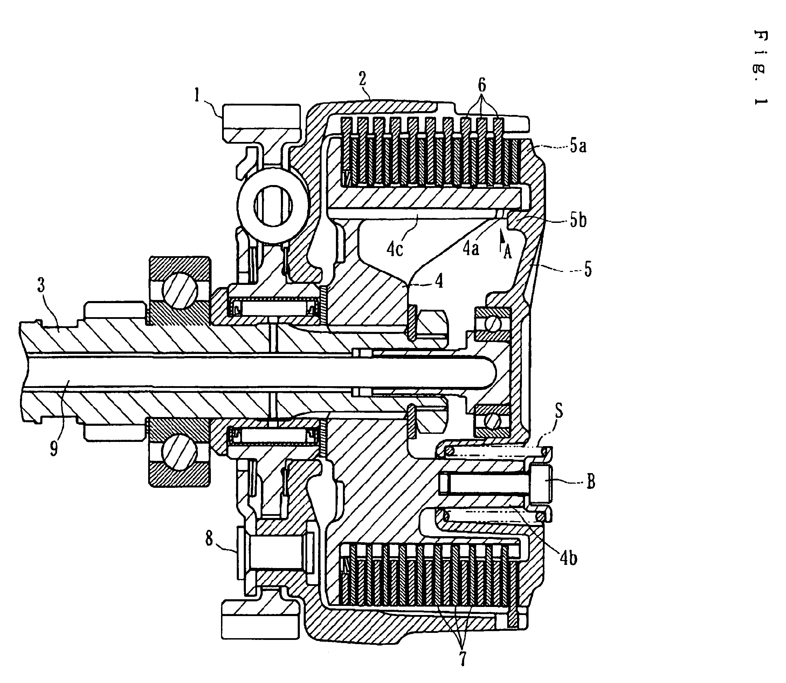

A preferred embodiment of the present invention will be hereinafter described with reference to accompanied drawings.
A power transmitting apparatus of a first embodiment of the present invention is mounted on a vehicle or motorcycle arbitrarily transmit or cut-off the driving force of an engine and transmission to or from rear wheels. As shown in Fig. 1, the power transmitting apparatus of the present invention comprises a clutch housing 2 on which a gear 1 as an input member is mounted, a clutch member 4 connected to a shaft 3 as an output member, a pressure plate 5 mounted on the clutch member 4 at the right end (in view of Fig. 1) thereof, driving clutch plates 6 connected to the clutch housing 2, and driven clutch plates 7 connected to the clutch member 4.

The gear 1 is rotated around the shaft 3 by a driving force (rotational force) transmitted from the engine and connected to the clutch housing 2 via rivets 8 etc. The clutch housing 2 is a cylindrical casing member opened at the right end thereof and provided with a plurality of driving clutch plates 6 on the inner circumferential surface thereof. Each of the driving clutch plates 6 is formed as a substantially annular plate member and rotated together with the clutch housing 2.

The clutch member 4 is formed as a cylindrical casing member opened at the right end thereof and adapted to be received within the clutch housing 2. The shaft 3 passes through the center of the clutch member 4 and is connected thereto via a spline connection and thus is rotated by the clutch member 4. Axially extending splines are formed on the outer circumferential surface of the clutch member 4 and the driven clutch plates 7 are fitted on the splines.

These driven clutch plates 7 are alternately arranged with the driving clutch plates 6 so that clutch plates 6 and 7 adjacent each other can be pressure-contacted or released. That is, both clutch plates 6 and 7 are allowed to be slid axially of the clutch member 4 and thus pressure-contacted each other when pushed by the pressure plate 5 toward a left direction (in view of Fig. 1) so that the rotational force can be transmitted to the clutch member 4 and the shaft 3. On the contrary, when releasing the pressure of the pressure plate 5, they are also released each other and the clutch member 4 cannot follow the rotation of the clutch housing 2 and is stopped so that no power cannot be transmitted to the shaft 3.

In this case, it should be noted that "release" of the clutch plates 6 and 7 means a condition in which the pressure-contact is lost and thus the clutch member 4 does not follow the rotation of the clutch housing 2 (i.e. a condition in which the driving clutch plates 6 slide on the driven clutch plates 7) and thus it is out of the question whether there is any clearance between the clutch plates 6 and 7. In addition, the clutch member 4 and the pressure plate 5 are articles made by casting.

The pressure plate 5 has a substantially disc configuration such as closing the opening (the right end) of the clutch member 4 and is normally urged toward a left direction by the clutch spring S. That is, the urging of the pressure plate 5 is achieved by the clutch spring S arranged between a boss portion 4b projected from the clutch member 4 and extending through the pressure plate 5 and a head of a clutch bolt B screwed in the boss portion 4b.

Thus the circumferential edge portion 5a of the pressure plate 5 abuts the clutch plates 7 and 6 positioned at most right position and the clutch plates 6 and 7 are normally pressure-contacted each other by the clutch spring S. Accordingly, the clutch housing 2 and the clutch member 4 are kept in a normally connected condition so that the gear 1 can rotate the shaft 3 when the rotational force is inputted to the gear 1.

Therefore, the push rod 9 is arranged inside of the shaft 3 and the pressure-contact force between the driving and driven clutch plates 6 and 7 can be released when a driver of vehicle operates to move a push rod 9 toward a right direction (in view of Fig. 1) so as to move the pressure plate 5 toward a right direction against the urging force of the clutch spring S. When the pressure-contacting force between the driving and driven clutch plates 6 and 7 is released, the rotational force inputted to the gear 1 and the clutch housing 2 is cut-off and thus not transmitted to the shaft 3. That is, the pressure-contact or the release between the plates 6 and 7 can be achieved by the axial movement of the push rod 9 and accordingly the pressure plate 5.

The pressure plate 5 is formed with several stopper portions 5b projected therefrom for limit rotation of the pressure plate 5 relative to the clutch member 4. Each stopper portion 5b has a projected configuration and is fitted in a recess 4a formed on the inner circumferential surface of the clutch member 4 to limit the relative rotation between the pressure plate 5 and the clutch member 4.

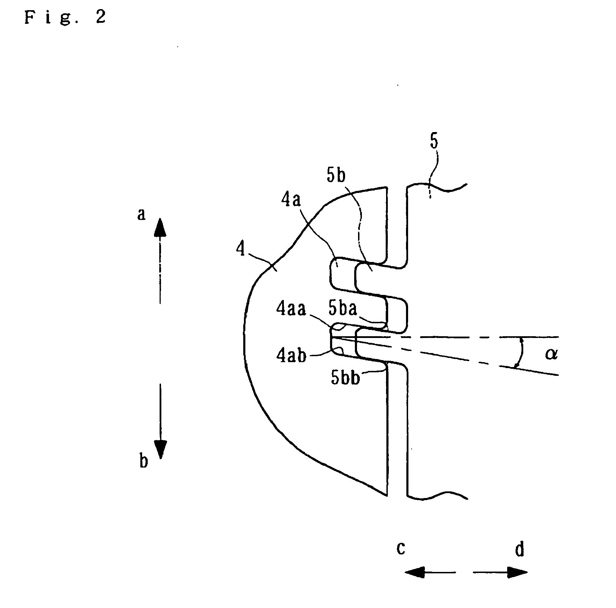

Referring to Fig. 2, the stopper portions 5b of the pressure plate 5 is formed with cam surfaces 5ba and 5bb each having a gradient α, on the other hand the recesses 4a of the clutch member 4 into which the stopper portions 5b are fitted is formed with cam surfaces 4aa and 4ab corresponding to the cam surfaces 5ba and 5bb respectively. That is, each pair of mutually contacting cam surfaces 5ba and 4aa forms the pressure-contact assisting cam and other pair of mutually contacting cam surfaces 5bb and 4ab forms the back-torque limiting cam.

When the rotational force inputted to the gear 1 and the clutch housing 2 is transmitted to the shaft 3 via the clutch member 4, the rotational force of a direction shown by an arrow "b" in Fig. 2 is applied to the clutch member 4. Accordingly, the pressure plate 5 is moved toward a direction shown by an arrow "c" by the camming action of pressure-contact assisting cams and thus the pressure-contact force between the driving and driven clutch plates 6 and 7 can be increased.

On the other hand, when the back-torque is caused in a direction shown by an arrow "a" if the rotation speed of the shaft 3 exceeds that of the gear 1 and the clutch housing 2, the pressure plate 5 is moved toward a direction shown by an arrow "d" and thus the driving and driven clutch plates 6 and 7 are released. Thus troubles of the power transmitting apparatus or power unit (e.g. an engine) which would be caused by the back-torque can be avoided.

According to the present invention, since the pressure-contact assisting cams and the back-torque limiting cams are arranged respectively at the recesses 4a on the inner circumferential wall of the clutch member 4 and the stopper portions 5b, it is possible to suppress increase of the manufacturing cost as compared with a case of additionally providing the pressure-contact assisting cams and the back-torque limiting cams at any other portions of the power transmitting apparatus. That is, since the clutch member 4 and the pressure plate 5 are formed by casting, two cams (pressure-contact assisting cams and back-torque limiting cams) can be formed in accordance with preformed profiled surfaces of dies and thus increase of a number of the parts can be avoided.

According to the power transmitting apparatus of the present invention, it is possible to obtain the pressure-contact assisting function and the back-torque limiting function only by changing the configuration of stopper portions and the recess for receiving the stopper portions of the prior art. Furthermore, since the stopper portions of the prior art also exhibit a function of preventing rotation of the pressure plate 5 and thus the stopper portions are made as having a relatively high rigidity, no other process for increasing the rigidity is required. Accordingly, the present invention can be easily applied to the power transmitting apparatus of the prior art.

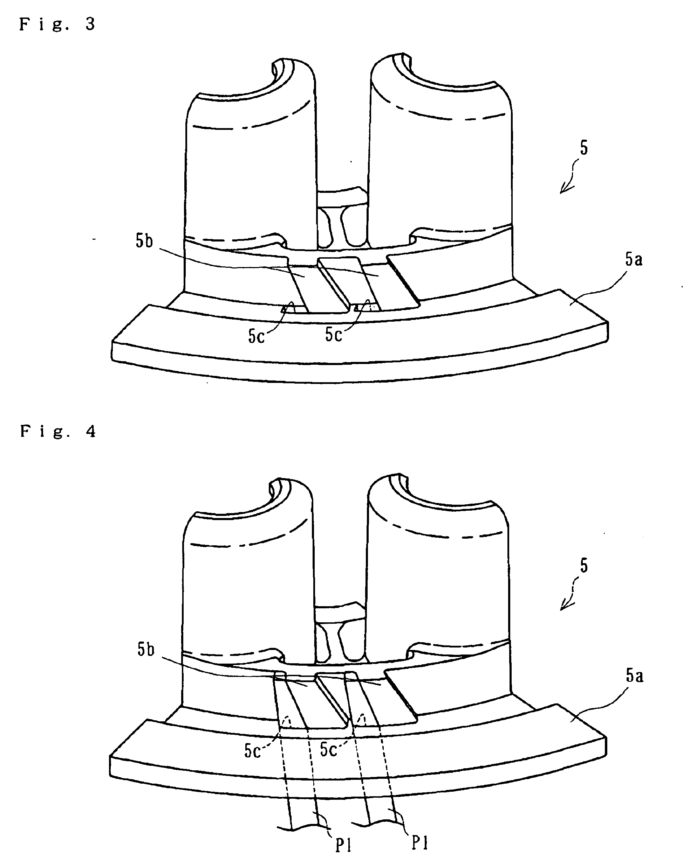

In the power transmitting apparatus, through windows 5c (see Fig. 3) and windows 4c (see Fig. 1) are formed in the pressure plate 5 and the clutch member 4 at positions near the pressure-contact assisting cams and the back-torque limiting cams respectively. In these windows, the windows 5c are formed as passing through portions corresponding to the pressure-contact assisting cams or the back-torque limiting cams and positioned at sides forming the reverse-draft surfaces when the pressure plate 5 is cast as shown in Fig. 3.

As shown in Fig. 4, when the pressure plate 5 is made by casting, pin-shaped cores P1 are inserted through the windows 5c (more particularly at positions in which the windows 5c are formed) in order to form cams having reverse-draft surfaces in either one of the pressure-contact assisting cams or the back-torque limiting cams. The description as to casting is made for convenience and thus the windows 5c can be formed together with the reverse-draft surfaces, in actual, by pouring molten metal into a cavity of casting mold at positions in which the windows 5c are to be formed after the pin-shaped cores P1 having been arranged. That is, it may be said that that the pin-shaped cores P1 are kept in their inserted condition through the windows 5c after the pressure plate 5 having been formed (i.e. prior to its release from the mold). This is true in case of a description as to forming of the windows 4c hereinafter mentioned.

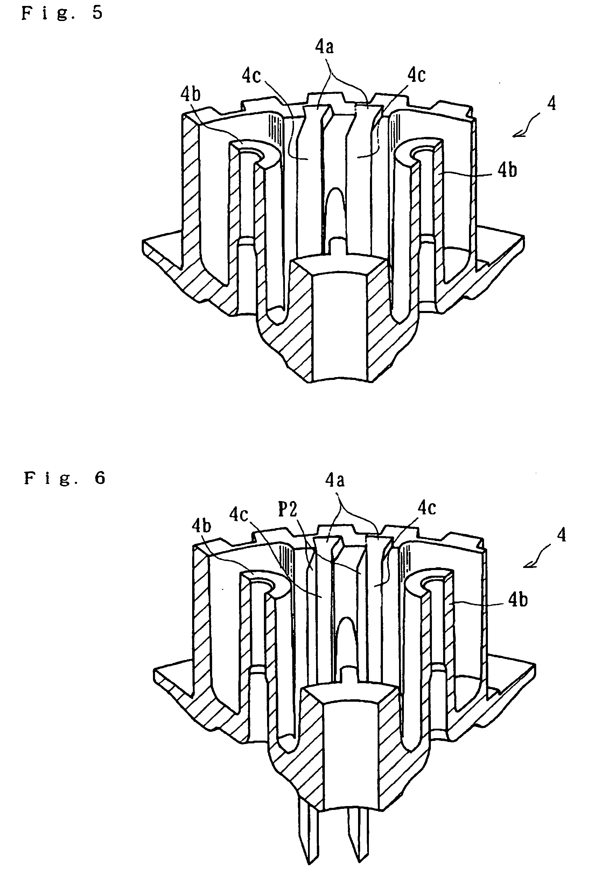

As shown in Figs. 1 and 5, the windows 4c are formed as passing through portions corresponding to the pressure-contact assisting cams or the back-torque limiting cams and arranged so that pin-shaped cores P2 can be inserted therethrough at sides forming the reverse-draft surfaces when the clutch member 4 is cast as shown in Fig. 6. When the clutch member 4 is made by casting, pin-shaped cores P2 are inserted through the windows 4c (more particularly at positions in which the windows 4c are formed) in order to form cams having reverse-draft surfaces in either one of the pressure-contact assisting cams or the back-torque limiting cams as shown in Fig. 6.

Accordingly the present invention enables to form well by casting the clutch member 4 and the pressure plate 5 of the power transmitting apparatus even though they have reverse-draft surfaces. Although the clutch member 4 and the pressure plate 5 are formed with through windows 4c and 5c, the windows 4c and 5c do not give any influence to functions of the clutch member 4 and the pressure plate 5, rather, the windows 4c and 5c contribute to reduction of weight of the power transmitting apparatus and cooling effect of the power transmitting apparatus can be expected owing to introduction of ambient air through the windows 4c and 5c during use of the power transmitting apparatus.

Although the present invention has been described with reference to the preferred embodiment, the present invention is not limited to the illustrated explanations. For example the present invention can be applied to an arrangement in which the pressure-contact assisting cams and the back-torque limiting cams have cam surfaces having different gradient angles. The power transmitting apparatus of the present invention can be applied to a power transmitting apparatus of multiple disc clutch type used for three or four wheeled buggy, machines for multiple use other than for a motorcycle.

### [Applicability in industry]

The method of manufacturing a power transmitting apparatus of the present invention can be applied to a method for manufacturing a power transmitting apparatus having different outline configurations or additional functions if they are apparatus in which the windows are formed as passing through portions corresponding to the pressure-contact assisting cams or the back-torque limiting cams and the reverse-draft surfaces are formed by casting with inserting the pin-shaped cores through the windows.

## Claims

1. Method for manufacturing a power transmitting apparatus comprising a clutch housing (2) rotatable together with an input member (1) and having a plurality of driving clutch plates (6); a clutch member (4) connected to an output member (3) and having a plurality of driven clutch plates (7) alternately arranged between the driving clutch plates (6) of the clutch housing (2); pressure plate (5) mounted on the clutch member (4) and movable in an axial direction of the clutch member (4) for carrying out the pressure-contact or release of the driving clutch plates (6) and the driven clutch plates (7) via the axial movement relative to the clutch member (4); stopper portions (5b) integrally projected from the pressure plate (5) and fitted in recesses (4a) formed on the inner circumferential surface of the clutch member (4) for limiting the rotation of pressure plate (5) relative to the clutch member (4); pressure-contact assisting cams (4aa and 5ba) for increasing the pressure-contacting force between the driving clutch plates (6) and driven clutch plates (7) when a condition of permission of transmission of the rotational force inputted to the input member (1) to the output member (3) is achieved; and back-torque limiting cams (4ab, 5bb) for releasing the connection between the driving clutch plates (6) and the driven clutch plates (7) when the rotation speed of the output member (3) has exceeded that of the input member (1), both the pressure-contact assisting cams (4aa, 5ba) and the back-torque limiting cams (4ab, 5bb) being formed on the recesses (4a) of the clutch member (4) and on the stopper portions (5b) of the pressure plate (5); and the pressure plate (5) including the stopper portions (5b) and the clutch member (4) including the recesses (4a) being formed by casting **CHARACTERIZED in that** the pressure plate (5) and the clutch member (4) are respectively formed with through windows (5c, 4c) at positions corresponding to the pressure-contact assisting cams (4aa, 5ba) and the back-torque limiting cams (4ab, 5bb) so as to form reverse-draft surfaces of the pressure-contact assisting cams (4aa, 5ba) and the back-torque limiting cams (4ab, 5bb) by inserting pin-shaped cores into the windows (5c, 4c).

2. Method for manufacturing a power transmitting apparatus of claim 1 wherein; the pressure-contact assisting cams (4aa, 5ba) and the back-torque limiting cams (4ab, 5bb) as well as pressure plate (5) and the clutch member (4) can be formed together with the reverse-draft surfaces by pouring molten metal into a cavity of casting mold at positions in which the windows 5c are to be formed after the pin-shaped cores P1 having been arranged.

3. Method for manufacturing a power transmitting apparatus of claim 1 comprising; the pressure-contact assisting cams (4aa, 5ba) formed with cam surfaces having a predetermined gradient on the stopper portion of the pressure plate and the back-torque limiting cams (4ab, 5bb) formed with cam surfaces having a predetermined gradient on the recess of the clutch member.

4. A power transmitting apparatus of claim 3 wherein the pressure-contact assisting cams (4aa, 5ba) and the back-torque limiting cams (4ab, 5bb) have cam surfaces having different gradient angles.

## Patentansprüche

1. Verfahren zum Herstellen einer Leistungsübertragungsvorrichtung, umfassend ein Kupplungsgehäuse (2), das zusammen mit einem Antriebselement (1) drehbar ist und mehrere Antriebskupplungsscheiben (6) aufweist; ein Kupplungsglied (4), das mit einem Abtriebselement (3) verbunden ist und mehrere angetriebene Kupplungsscheiben (7) aufweist, die abwechselnd zwischen den Antriebskupplungsscheiben (6) des Kupplungsgehäuses (2) angeordnet sind; eine Druckplatte (5), die an dem Kupplungsglied (4) angebracht ist und in einer axialen Richtung des Kupplungsglieds (4) zum Ausführen des Druckkontakts oder der Freigabe der Antriebskupplungsscheiben (6) und der angetriebenen Kupplungsscheiben (7) über die axiale Verschiebung bezüglich des Kupplungsglieds (4) verschiebbar ist; Anschlagabschnitte (5b), die einstückig von der Druckplatte (5) vorragen und in Aussparungen (4a), die an der inneren Umfangsfläche des Kupplungsglieds (4) ausgebildet sind, zum Begrenzen der Drehung der Druckplatte (5) bezüglich des Kupplungsglieds (4) eingepasst sind; druckkontaktfördernde Nocken (4aa und 5ba) zum Erhöhen der Druckkontaktkraft zwischen den Antriebskupplungsscheiben (6) und den angetriebenen Kupplungsscheiben (7), wenn eine Bedingung der Erlaubnis zur Übertragungs der Drehkraft, die dem Antriebselement (1) dem Abtriebselement (3) zugeführt ist, erzielt ist; und rückdrehmomentbegrenzenden Nocken (4ab, 5bb) zum Freigeben der Verbindung zwischen den Antriebskupplungsscheiben (6) und den angetriebenen Kupplungsscheiben (7), wenn die Drehgeschwindigkeit des Abtriebselements (3) die des Antriebselements (1) überschritten hat, wobei die druckkontaktfördernde Nocken (4aa, 5ba) und die rückdrehmomentbegrenzenden Nocken (4ab, 5bb) beide an den Aussparungen (4a) des Kupplungsglieds (4) und an den Anschlagabschnitten (5b) der Druckplatte (5) ausgebildet sind; und wobei die Druckplatte (5), die die Anschlagabschnitte (5b) enthält, und das Kupplungsglied (4), das die Aussparungen (4a) enthält, durch Gießen ausgebildet werden, **dadurch gekennzeichnet, dass** die Druckplatte (5) und das Kupplungsglied (4) jeweils mit Durchgangsfenstern (5c, 4c) an Positionen ausgebildet werden, die den druckkontaktfördernden Nocken (4aa, 5ba) und den rückdrehmomentbegrenzenden Nocken (4ab, 5bb) entsprechen, um Umkehrzugflächen der druckkontaktfördernden Nocken (4aa, 5ba) und der rückdrehmomentbegrenzenden Nocken (4ab, 5bb) durch Einfügen von zapfenförmigen Kernen in die Fenster (5c, 4c) auszubilden.

2. Verfahren zum Herstellen einer Leistungsübertragungsvorrichtung nach Anspruch 1, wobei die druckkontaktfördernden Nocken (4aa, 5ba) und die rückdrehmomentbegrenzenden Nocken (4ab, 5bb) sowie die Druckplatte (5) und das Kupplungsglied (4) zusammen mit den Umkehrzugflächen durch Eingießen von Metall-Schmelze in einen Gießformhohlraum an Positionen, an denen die Fenster (5c) ausgebildet werden sollen, nachdem die zapfenförmigen Kerne P1 angeordnet wurden, ausgebildet werden können.

3. Verfahren zum Herstellen einer Leistungsübertragungsvorrichtung nach Anspruch 1, umfassend die druckkontaktfördernden Nocken (4aa, 5ba), die mit Nockenoberflächen mit vorgegebener Steigung am Anschlagabschnitt (5b) der Druckplatte (5) ausgebildet werden, und die rückdrehmomentbegrenzenden Nocken (4ab, 5bb), die mit Nockenoberflächen mit einer vorgegebenen Steigung an der Aussparung (4a) des Kupplungsglieds (4) ausgebildet werden.

4. Leistungsübertragungsvorrichtung nach Anspruch 3, wobei die druckkontaktfördernden Nocken (4aa, 5ba) und die rückdrehmomentbegrenzenden Nocken (4ab, 5bb) Nockenoberflächen mit unterschiedlichen Steigungswinkeln aufweisen.

## Revendications

1. Procédé de fabrication d'un dispositif de transmission de puissance comprenant un carter d'embrayage (2) capable de tourner avec un élément d'entrée (1) et ayant une pluralité de disques d'embrayage d'entraînement (6) ; un élément d'embrayage (4) relié à un élément de sortie (3) et ayant une pluralité de disques d'embrayage entraînés (7) agencés de façon alternative entre les disques d'embrayage d'entraînement (6) du carter d'embrayage (2) ; un plateau de pression (5) monté sur l'élément d'embrayage (4) et mobile dans une direction axiale de l'élément d'embrayage (4) pour réaliser le contact par pression ou la libération des disques d'embrayage d'entraînement (6) et des disques d'embrayage entraînés (7) via le mouvement axial par rapport à l'élément d'embrayage (4) ; des parties de butée (5b) faisant intégralement saillie depuis le plateau de pression (5) et placées dans des retraits (4a) formés sur la surface circonférentielle intérieure de l'élément d'embrayage (4) pour limiter la rotation du plateau de pression (5) par rapport à l'élément d'embrayage (4) ; des cames d'aide à contact par pression (4aa et 5ba) pour augmenter la force de contact par pression entre les disques d'embrayage d'entraînement (6) et les disques d'embrayage entraînés (7) lorsqu'une condition d'autorisation de transmission de la force rotative entrée dans l'élément d'entrée (1) vers l'élément de sortie (3) est réalisée ; et des cames de limitation de couple arrière (4ab, 5bb) pour libérer la connexion entre les disques d'embrayage d'entraînement (6) et les disques d'embrayage entraînés (7) lorsque la vitesse de rotation de l'élément de sortie (3) a dépassé celle de l'élément d'entrée (1), les cames d'aide à contact par pression (4aa, 5ba) et les cames de limitation de couple arrière (4ab, 5bb) étant formées sur les retraits (4a) de l'élément d'embrayage (4) et sur les parties de butée (5b) du plateau de pression (5) ; et le plateau de pression (5) comprenant les parties de butée (5b) et l'élément d'embrayage (4) y compris les retraits (4a) formés par coulage **caractérisé en ce que** le plateau de pression (5) et l'élément d'embrayage (4) sont respectivement formés avec des fenêtres de passage (5c, 4c) à des positions correspondant aux cames d'aide à contact par pression (4aa, 5ba) et aux cames de limitation de couple arrière (4ab, 5bb) afin de former des surfaces à courant inversé des cames d'aide à contact par pression (4aa, 5ba) et des cames de limitation de couple arrière (4ab, 5bb) en insérant des noyaux en forme de broche dans les fenêtres (5c, 4c).

2. Procédé de fabrication d'un dispositif de transmission de puissance selon la revendication 1 dans lequel les cames d'aide à contact par pression (4aa, 5ba) et les cames de limitation de couple arrière (4ab, 5bb) ainsi que le plateau de pression (5) et l'élément d'embrayage (4) peuvent être formés ensemble avec les surfaces à courant inversé en versant du métal fondu dans une cavité d'un moule aux positions où les fenêtres 5c doivent être formées après que les noyaux en forme de broche P1 aient été agencés.

3. Procédé de fabrication d'un dispositif de transmission de puissance selon la revendication 1 comprenant les cames d'aide à contact par pression (4aa, 5ba) formées avec des surfaces de came ayant un gradient prédéterminé sur la partie de butée du plateau de pression et les cames de limitation de couple arrière (4ab, 5bb) formées avec des surfaces de came ayant un gradient prédéterminé sur le retrait de l'élément d'embrayage.

4. Appareil de transmission de puissance selon la revendication 3 dans lequel les cames d'aide à contact par pression (4aa, 5ba) et les cames de limitation de couple arrière (4ab, 5bb) ont des surfaces de came ayant différents angles de gradient.
